# EUROPEAN PATENT APPLICATION

(11) **EP 1 933 252 A1**
(43) Date of publication of application: **18.06.2008**
(21) Application number: 06291933.7
(22) Date of filing: 13.12.2006
(51) Int. Cl.: G06F 21/20, G06K 19/07, H04Q 7/32, H04L 29/06, H04L 9/08

(54) **Dynamic OTP Token**

(71) Applicant: Axalto S.A., 92190 Meudon (FR)
(72) Inventor: Nachef, Armand, FR-92197 Meudon Cedex (FR)

(57) **Abstract**

The invention relates to an OTP token (OTP-SIM). The OTP token (OTP_SIM) comprises linking means. The linking means are set to generate an OTP seed, to encrypt the OTP seed with an asymmetric public key of an OTP server (OTP_SRV), and to send the encrypted OTP seed to the OTP server (OTP_SRV). This enables the linking of the OTP server (OTP_SRV) with the OTP token (OTP_SIM), while the OTP token (OTP_SIM) has already been delivered to a user.

## Description

The invention relates to secure electronic devices. More particularly, it relates to One Time Password tokens, also known as OTP tokens. OTP has been introduced in order to overcome the limitations of passwords (sometimes referred to as static passwords), as explained in particular in Wikipedia (an online encyclopedia) and summarized below.

A password is a form of secret authentication data that is used to control access to a resource. Passwords are kept secret from those not allowed access, and those wishing to gain access are tested on whether or not they know the password and are granted or denied access accordingly. Passwords have a number of drawbacks. In particular, they are either hard to remember for the user, or easy to guess by third parties (in particular hackers). Many authentication protocols relying on passwords transmit the password in clear text, which poses a security threat (the password can be intercepted). In addition, passwords are usually prone to so-called "replay attack", in which once the password has been intercepted or guessed, the hacker willing to impersonate the password owner simply submits the stolen password when requested by the attacked system.

Several improvements have been devised in order to overcome the limitations of passwords, including PKI (public key cryptography) based authentication, and one time passwords.

OTPs are passwords which are valid only once. An OTP server computes the current OTP for a given user, and such user needs to generate the same OTP (e.g. with an OTP client software installed on an OTP token or on a PC) in order to authenticate. The two OTPs are compared in order to authenticate the user. The invention focuses more specifically on OTP tokens (which may comprise a software OTP client or a dedicated hardware for computing OTPs without the need for a software OTP client). The OTP server and the OTP token have to share a seed in order to generate the same series of OTPs on both sides. Therefore the OTP token and server have to know and trust each other. The seed may comprise a symmetric key coupled with the current time (in which case the OTP token and server should be synchronized in order to rely on the same time). Alternatively, it may comprise a symmetric key and an event counter, which is advantageous in particular when using OTP tokens, especially when the OTP token has no embedded power supply (which makes it impossible to know the current time without contacting an external entity, since the time is lost whenever the token is powered down).

OTPs typically rely on complex calculation, which a typical user is unable to perform mentally. At least the two types of OTPs mentioned above are in widespread use. A first type uses a mathematical algorithm to generate a new password based on an event (e.g. the previously generated OTP may be used for the next OTP, the event being the generation of an OTP). A simple implementation of the first type consists in printing a list of OTPs and giving it to the user. This may be prone to phishing attacks. A second implementation type is based on time-synchronization between an authentication server (OTP server) and a hardware or a client software providing the password (which may be embedded in an OTP token), and typically derives the password from the current time. To this end, a piece of hardware and/or software for computing OTPs is installed on a user's device (PC, PDA, dedicated OTP token, etc.) and on the server. It is also possible to mix both types, i.e. to derive the next password from the previous and from the current time (and possibly other parameters). OTPs have a number of constraints (such as synchronization between the OTP server and the OTP token), which are now well understood by those skilled in the art.

Another improvement over regular passwords has been the introduction of multiple-factor authentication. In a multiple-factor authentication protocol, multiple independent ways to establish identity and privileges are required. This contrasts with traditional password authentication, which requires only one factor (knowledge of a password) in order to gain access to a system. Common implementations of two-factor authentication use 'something you know' as one of the two factors, and use either 'something you have' or 'something you are' as the other factor. Using more than one factor of authentication is also called strong authentication; using just one factor, for example just a password, is considered by some weak authentication. A common example of two-factor authentication is based on the use of a bank card. The card itself is the physical item, and the personal identification number (PIN) is the data that goes with it. The three most commonly recognized factors are:
- 'Something you know', such as a password or PIN
- 'Something you have', such as a credit card or hardware token
- 'Something you are', such as a fingerprint, a retinal pattern, or other biometric.

Other, less common factors may include:
- location-based authentication, such as only allowing a particular atm, charge, or credit card to be used at a specific merchant or at a specific bank branch, or only allowing root access from specific terminals
- time-based authentication, such as only allowing access from certain accounts during normal working hours
- size-based authorization, such as only allowing a specific transaction to be for a specific exact amount
- pre-authorized transactions, such as where a company uploads all of the check numbers and amounts written for each check to their bank, and the bank would then reject any check not of those numbers and amounts as fraudulent

Multiple-factor authentication and OTP may be combined. For example, it is possible to implement OTP in a hardware token, as already mentioned. Access to the token may be protected (e.g. by a password, by a PIN code, by a fingerprint recognition or by other techniques) in order to prevent a thief (or anybody finding a lost OTP token) from using the OTP token. OTP tokens are in widespread use.

OTP tokens comprise tokens (such as smart cards) in which an OTP client has been loaded (typically in the form of a software application, such as a Java applet) before issuance. This first type of OTP token is generally simple (it may simply consist of a properly programmed chip embedded in a plastic card body). However this type of OTP tokens is inconvenient because it requires that the OTP server be known in advance. Indeed, the OTP server and the OTP token need to know each other in order to generate the same OTP (they have to share a secret seed).

An example of OTP tokens consists of a SIM (Subscriber Identity Module, used in mobile telephony) to which an OTP option is added (e.g. OTP applet). SIMs typically consist of smart cards, and may exist in different form factors (e.g. regular ISO 7816 SIM smart card, MMC with SIM features, etc.).

Unfortunately, an OTP applet is typically pretty big (it may take several kilobytes) and it is inconvenient to load such applet inside the SIM once the SIM has been issued (i.e. the SIM is distributed to the users). In the context of GSM networks, loading the applet is typically done "over the air" using the SMS channel, which can quickly be overloaded.

It is typically impossible to load the applet in advance before the SIM is issued, because at the time of issuance, it is not possible to know the OTP servers to which the SIM user might be willing to connect in the future. In some cases such OTP server might be put in place after the SIM is issued (i.e. the OTP server didn't even exist when the SIM was issued).

Therefore it is not necessarily possible to know the key of the OTP server in advance.

In order to avoid this problem, a solution consisting of a server-based OTP sent by SMS has been proposed. In such a solution, the OTP is computed solely on the server and is sent to the SIM by SMS over the SMS channel which is assumed to be trusted. The user may display the SMS on a cell phone in which the SIM is inserted, and type the OTP on a PC requesting an OTP, e.g. for accessing a restricted web site via a connection which is typically considered insecure (e.g. Internet connection in a Cybercafé).

This solution generates SMS revenue for the operators, but accordingly it is costly for the users. In addition, it relies on the security of the SMS channel, while the SMS channel could be spied.

It is an object of the invention to provide an OTP token which is flexible enough to cooperate with new OTP servers once it is issued, and which has minimum dependency on any network for the purpose of cooperating with new OTP servers.

An OTP token according to the invention comprises linking means, the linking means being set to:
- generate an OTP seed,
- encrypt the OTP seed with an asymmetric public key of an OTP server, and
- send the encrypted OTP seed to the OTP server,
thereby enabling the linking of the OTP server with the OTP token, while the OTP token has already been delivered to a user.

Once the OTP token has been delivered to a user, it is in general no longer possible to load it securely and easily with extra information. Any loading of data into the OTP token may require either the user bringing the OTP token back to a special location (e.g. store where the OTP token was purchased) where the information can be loaded with dedicated equipments, or a network connection with the OTP token, but the network connection typically involves public networks, is prone to attacks, may be slow, and may be adversely affected by numerous concurrent OTP applet downloads, as mentioned earlier.

The OTP token according to the invention is advantageous in that it can be issued with the OTP features (e.g. OTP applet) but without any key material (or any other type of secret) associated with the OTP server(s), which is (are) not yet known at that stage. Of course, key material (or other secrets) associated with OTP servers which are already known can be preloaded. The seed can be preloaded, if it is known, as it avoids any further network communication.

When access to a new OTP server is needed, there is no need to load the whole OTP features (e.g. applet) into the OTP token, which as seen above is inconvenient, but simply to obtain the public key of the OTP server, and to reply with the encrypted seed. This requires a minimum bandwidth.

Once this exchange is done, there is normally no more need to access the network. The OTP token is autonomous and can generate OTPs upon request without systematic need for a network connection.

This is advantageous, as it avoids eavesdropping by attackers.

This is also advantageous for certain types of OTP tokens such as OTP SIM cards inserted in a cellular phone, in that even if there is no cellular network coverage, the OTP can be generated autonomously and displayed to the user, who may connect to a desired restricted web site from his PC, provided the Internet connection of the PC is working. For this kind of OTP tokens, another advantage lies in the fact that in case the user wishes to access the Internet directly from his cell phone and has only a limited trust in the cellular network, the OTP is generated autonomously and with minimum risk associated with the cellular network.

When the OTP feature is made available on the OTP token via an OTP applet (or other form of executable code), the invention is also advantageous in that loading the applet is done before the OTP token is issued, and therefore under strict control. Loading an applet on the field could be problematic as it may open certain attacks (each time executable code is loaded in the OTP token, there is a possibility that the code has been hacked somehow and that the OTP token will not behave as expected). There are countermeasures preventing the loading of rogue code, and such countermeasures are considered pretty efficient, therefore this risk is not considered significant in general. But not loading any code on the field (by loading the code in advance) is an even more powerful technique, since it prevents any attack of this kind irrespective of the efficiency of the countermeasures against code download attacks.

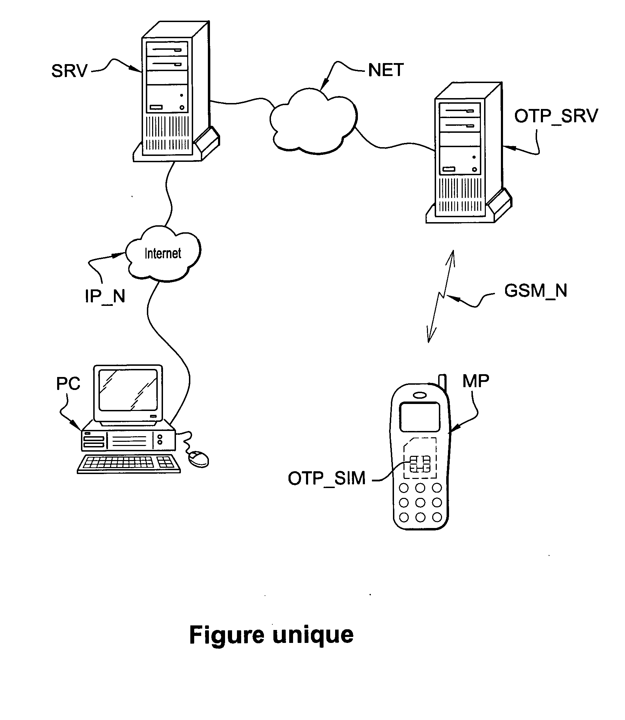

The invention and its advantages will be explained more in details in the following specification referring to the appended drawing, in which Figure 1 depicts a preferred embodiment in which an OTP token according to the invention communicates with an OTP server.

Figure 1 shows a preferred embodiment in which the OTP token OTP_SIM consists of a SIM card inserted in a mobile phone MP.

When a new OTP server OTP_SRV is to be used by the user, an asymmetric public key of the OTP server OTP_SRV is sent to the OTP token OTP_SIM via the mobile phone MP, through a GSM network GSM_N.

The OTP server OTP_SRV may be part of the mobile network operator servers, or may be a server interconnected with the mobile network operator servers.

The OTP token replies with an encrypted seed, which is sent back to the OTP server OTP_SRV via the same path. Once the OTP server OTP_SRV and the OTP token OTP_SIM share the seed, they can generate identical OTPs and authenticate each other on this basis.

When the user wishes to connect to a server SRV, such as an online banking server, from a personal computer PC, and when the server SRV requires OTP authentication guaranteed by the OTP server OTP_SRV, the user may proceed as follows. The mobile phone MP may be used to display the OTPs generated by the SIM card OTP_SIM. The OTP is typically only generated upon correct PIN code presentation by the user. Once the OTP is displayed, the user may type it on the personal computer PC. The personal computer PC may then send the OTP to the server SRV via a network IP_N, which is typically an IP network, such as the Internet. The server SRV may check that the OTP is valid with the OTP server OTP_SRV with which it is interconnected via a network NET. The OTP server OTP_SRV and the server SRV may be mutually authenticated with techniques known in the art.

In preferred embodiments, in order to generate the OTP seed, the OTP token OTP_SIM generates a random number.

The random number may for example represent a cryptographic key (such as a DES, 3DES or AES key for example), plus possibly an initial counter value.

In preferred embodiments, the linking means of the OTP token OTP_SIM can be activated by the OTP server OTP_SRV.

The activation of the linking means by the OTP server OTP_SRV may comprise sending an asymmetric public key from the OTP server OTP_SRV to the OTP token OTP_SIM. The asymmetric key is preferably as small as possible, therefore algorithms with short keys, such as elliptic curves, are preferred, however other algorithms are possible as well (e.g. RSA, etc.).

Activation by the server is advantageous, as it allows a new OTP server to link with the OTP token without involvement of the user. Next time the user wants to generate an OTP, the OTP token may then inform the user that one more OTP server has been linked, therefore the list of OTP servers for which the OTP has to be generated has grown without the user having to participate. In the context of the invention, it is expected that OTP servers are typically independent entities and each have their own seed, therefore before generating an OTP, the OTP token may typically offer the user the possibility of selecting the OTP server for which the OTP should be generated. The OTP token may let the user identify one OTP server as the default OTP server, in order not to have to select the server each time (if there's one server which is used more often than the others).

The linking means of an OTP token OTP_SIM according to the invention may also be activated by a user of the OTP token OTP_SIM.

For example, the activation of the linking means by a user may comprise:
- the specification of an OTP server OTP_SRV by the user to the OTP token OTP_SIM. E.G. the user may select an OTP server from a list of current OTP servers downloaded via a network, or the user may type the parameters of the OTP server, such as its IP address.
- the request of an asymmetric public key from the OTP server OTP_SRV by the OTP token OTP_SIM. This step is typically automatic (no user involvement needed).

This user activation is advantageous when the user wishes to subscribe to a new service, and when this service requires authentication by an OTP. The service may rely on an OTP server which is not yet known to the OTP token, in which case the user may decide to add the OTP server to the list of OTP servers supported by his OTP token.

In preferred embodiments, the OTP token OTP_SIM expects the asymmetric public key received from the OTP server to be embedded in a certificate. This is one of the techniques to verify that the public key is really the public key of that server.

The OTP token OTP_SIM may be a smart card as described above. Of course, other form factors are possible, for example an OTP token may be a USB key, pluggable in a personal computer PC, and displaying the OTP on the PC. In such case, it is advantageous to display the OTP in a distorted form (the distorted form being preferably generated inside the OTP token in the form of an image file, e.g. a bitmap) in order that automated software can't do optical character recognition and recover the OTP. The same type of distortions as used in CAPTCHA can be applied. This ensures that the OTP that is typed has been seen by a human being, using the OTP token. This technique is advantageous as it helps prevent attacks consisting in intercepting the PIN of the OTP token while it is typed on the PC keyboard, or while it is sent to the USB token on the USB bus, and using the stolen PIN in order to generate OTPs without user consent.

When the OTP token OTP_SIM is a SIM belonging to a mobile network operator using a cellular technology such as GSM, it is advantageous to send the OTP seed to the OTP server OTP_SRV by SMS (i.e. using a short message).

The invention also relates to a system comprising an OTP token OTP_SIM as described above and an OTP server OTP_SRV.

## Claims

1. OTP token (OTP_SIM) **characterized in that** it comprises linking means, the linking means being set to
a. generate an OTP seed,
b. encrypt the OTP seed with an asymmetric public key of an OTP server (OTP_SRV), and
c. send the encrypted OTP seed to the OTP server (OTP_SRV).

2. OTP token (OTP_SIM) according to claim 1, wherein generating the OTP seed comprises generating a random number.

3. OTP token (OTP_SIM) according to any previous claim, wherein the linking means can be activated by the OTP server (OTP_SRV).

4. OTP token (OTP_SIM) according to claim 3, wherein the activation of the linking means by the OTP server (OTP_SRV) comprises sending an asymmetric public key from the OTP server (OTP_SRV) to the OTP token (OTP_SIM).

5. OTP token (OTP_SIM) according to any previous claims, wherein the linking means can be activated by a user of the OTP token (OTP_SIM).

6. OTP token (OTP_SIM) according to claim 5, wherein the activation of the linking means by a user comprises
a. the specification of an OTP server (OTP_SRV) by the user to the OTP token (OTP_SIM),
b. the request of an asymmetric public key from the OTP server (OTP_SRV) by the OTP token (OTP_SIM).

7. OTP token (OTP_SIM) according to any previous claim, wherein the asymmetric public key is embedded in a certificate.

8. OTP token (OTP_SIM) according to any previous claim, wherein the OTP token (OTP_SIM) is a smart card.

9. OTP token (OTP_SIM) according to any previous claim, wherein the OTP token (OTP_SIM) is a SIM.

10. SIM (OTP_SIM) according to claim 9, wherein the SIM (OTP_SIM) sends the OTP seed to the OTP server (OTP_SRV) by SMS.

11. System comprising an OTP token (OTP_SIM) according to any previous claim and an OTP server (OTP_SRV).
